# EUROPEAN PATENT APPLICATION

(11) **EP 4 653 176 A2**
(43) Date of publication of application: **26.11.2025**
(21) Application number: 25207435.6
(22) Date of filing: 11.01.2023
(51) Int. Cl.: B29C 51/42

(54) **A SYSTEM AND A METHOD FOR MANUFACTURING MOLDED PIECES**

(62) Divisional of application: 23382013.3
(71) Applicant: Fundación AITIIP, 50720 Zaragoza (ES)
(72) Inventor: MARQUÉS PAOLA, Alejandro, 50720 Zaragoza (ES); LAGUÍA PÉREZ, Alberto, 50720 Zaragoza (ES); MONZÓN CATALÁN, Iván, 50720 Zaragoza (ES); GONZALVO BAS, Berta, 50720 Zaragoza (ES); DIESTE MARCIAL, José Antonio, 50720 Zaragoza (ES); GRACIA ARANEGA, Pascual, 50720 Zaragoza (ES)
(74) Representative: ABG Intellectual Property Law, S.L.

(57) **Abstract**

The present invention is related to a system and method for manufacturing molded pieces in a molding machine, preferably departing from composite plates formed from layers, e.g. carbon fiber layers, through pressing, with a pre-heating step heating the composite plate. According to a preferred embodiment, in order to reduce thermal inertia and optimize the circuits, the molds are heated using thermal fluid flowing through internal ducts with an optimized path, through molds printed using additive manufacturing techniques. In a preferred embodiment, the plate is preheated by means of a heating system with mobile lamps.

## Description

### FIELD OF THE INVENTION

The present invention is related to a system and method for manufacturing molded pieces in a molding machine, preferably departing from composite plates formed from layers, e.g. carbon fiber layers, through pressing, with a pre-heating step heating the composite plate.

According to a preferred embodiment, in order to reduce thermal inertia and optimize the circuits, the molds are heated using thermal fluid flowing through internal ducts with an optimized path, through molds printed using additive manufacturing techniques.

In a preferred embodiment, the plate is preheated by means of a heating system with mobile lamps.

### PRIOR ART

Pressing processes are performed by a mold and a counter mold installed in a molding machine.

Composite plates are known as SMCs (Sheet Molding Compounds), wherein such composite plates are produced ensuring complete integration of fibers and resin.

According to the prior art, the molding process includes a model of manufacturing which also encompasses different methodologies that seek greater efficiency in the forming of parts.

In the manufacturing process, from a general point of view, some amount of energy is applied to raw material in order to make it melt, or at least be able to flow by adapting the material to the shapes imposed by a mold.

Known processes involves the use of injection devices allowing to introduce in a forced way the material with flowing capacity inside a cavity formed inside the mold, so that the material adapts to the shape of the cavity resulting in the preset shape of the part to be manufactured. The raw material is configured according to the desired final shape, and possibly, some fraction of waste has to be removed at a later stage to provide the final product. Some of the main objectives are to optimize the variables of quality, cost and productivity.

Within the existing categorization of processes, molding is part of the mechanical processes very well known for instance in metal working, being one of the most basic operations of manufacturing by forming. In most cases the molding processes with casting involves: pouring on the mold, solidification and cooling. This method is a very versatile but complex method, since it requires taking into account numerous parameters that affect the effectiveness and quality of the process, such as the melting temperature, the pouring techniques, which at high temperatures involve the generation of trapped gases, the generation of defects, pores or cracks in the solidification process, or the difficulty in the final separation of the part from the mold. Within the casting molding processes, there are currently sand molding, shell molding, lost wax molding or gravity molding.

However, the process disclosed according to embodiments of the present invention relies on plastic deformation processes, so that it does not require the casting process of the part to be molded.

On the contrary, in metal working, deformation is possible because external forces are applied to raw material, thus causing a tensional state in the crystalline inner structure of the metal material, which, if certain values are exceeded, causes the desired permanent deformations.

Intuitively, one may come to think that casting the material is the most efficient method, achieving complicated shapes of very precise forms without the need for any machining process; or at least minimizes the subsequent machining process.

Casting has, therefore, always been a preferred option, since it allows the molding of parts very efficiently while requiring much less energy than cold, the ductility and hardening of the parts do not limit the amount of deformation of the material on the part, and its properties are mainly isotropic.

When manufacturing plastic pieces, molding processes are based on injection molds wherein the melted material shows complex fluid properties since melted plastic is a non-Newtonian fluid (without a defined and constant viscosity value) and the techniques that are valid for metals cannot be extrapolated to the model of plastic parts.

Some other known forming methods are based on cold forming, such as metal stamping techniques. Such methods involve strengthening of the area upon impact, a great deal of savings in furnace and fuel costs, and the most significant advantage is that it involves such a low amount of heating and cooling time, that for the specific case of working with large workpieces means a significantly increase in productivity.

There are also known techniques for the manufacture of parts formed by stacking layers of resin-bonded fibers. The set of layers, for example of carbon fiber, Kevlar, glass, are positioned in a mold and forced in cold to adopt the final shape.

On each of the layers, the resin is added cold, which helps the layer to adopt the shape of the mold until the total number of layers is completed. At this point, the counter-mold is superimposed, which presses the whole assembly. In many cases the set of layers with the resin that leaves the fibers embedded is inside a bag that is subjected to vacuum.

Subsequently, the set is taken to an autoclave that causes the curing and hardening process of the piece. The final part also requires additional operations such as the removal of the back mold and the bag and, finally, the extraction of the part from the mold.

This process has many drawbacks, the main one being the difficulty of automation. In most cases the layers of fiber are applied by hand so that the worker ensures that the layer is properly adapted to the shape imposed by the mold and only when he observes that he has achieved this adaptation is when he adds resin and incorporates the next layer.

The other problem with this method is the lack of dimensional control, especially with respect to the thickness of the part.

The automation of this process and ensuring that the final dimensions are adequate is easier when the part manufactured by this procedure is a flat plate of constant thickness.

If we refer directly to the cold compression molding methodology, since it does not require such high temperatures as casting molding, it is one of the oldest plastic deformation processes in existence, being described for the first time at the beginning of the 19th century. In this process, after a previous heating at moderate temperatures, the part in its original shape is placed on the open mold. After locating the part in the mold, the mold is closed by applying force until all areas of the part come into contact with the mold. The molds used for this process are generally simpler than those used for casting and injection molding, since they do not require mold chutes or feeding systems, but they do require accessories to heat the mold.

In terms of materials, molding is also very often used for thermosets. Unsaturated polyester resins, obtained from PET, are usually used. This resin is cross-linked to form a thermosetting material, together with some kind of stress. Curing process may involve the use of heat after the material is inside of the mold. However, the method is applicable to a wide variety of thermoformable materials, such as rigid polymers or semi-finished thermoplastics. Probably the material belonging to the state of the art that is closest to the materials to be working with is the SMC (Sheet Molding Compound), which consists of laminar elements structured in deformable layers and with heat application within a specific temperature range, which, after molding, still maintains their laminar structure. They are produced by deposition of fibers projected by a cutter on a strip, which then serves as a support and on which a constant thickness of resin is already present. A recently developed variant that would also be of interest consists in the LSMC (Low Pressure Molding Compound) materials, which maintain a molding temperature with a much reduced viscosity compared to classic SMCs, allowing eight times lower molding stresses and stress addition.

Within this context, presses are normally employed to exert sufficient force on both molds, mold and counter mold. Commonly, the process is carried out with a vertical molding path, as this allows the use of gravity to mold the part by exerting both, the necessary pressure on the plate. Therefore, there is no guidance at any time in the trajectory of the plate, nor the possibility of heating both sides of it, since it is always supported by the counter-mold. And although there may be certain clamps that hold the edges of the plate, they do not follow the motion, nor do they have any type of elastic characteristic that adapts to the movement. Clamps are intended for ensuring rigidity of the edges and gravity ensures that the plate remains supported on the bottom mold.

Finally, this process is composed of two different stages: the upward stroke by the lower mold, although in some systems it remains fixed, and the downward stroke by the upper counter mold. Generally, the system is made up of a hydraulic cylinder that exerts the necessary force to carry out the molding, and commonly consists of a male and a female plunger mold, with grooved pins that ensure the perfect fitting of both parts.

There is also a need in the art for a system and method for manufacturing molded pieces in a molding machine with the aforementioned needs.

### DESCRIPTION OF THE INVENTION

The present invention provides a solution for the above mentioned issues by a system for manufacturing molded pieces according to independent claim 1 and a method for manufacturing molded pieces by means of the system according to claim 16. In dependent claims, preferred embodiments of the invention are defined.

*In a first inventive aspect, the present invention provides a system for manufacturing molded pieces, comprising at least the following elements:*
- *a molding machine, comprising two supports for supporting two mold pieces, a first support adapted to receive a mold and a second support adapted to receive a counter mold, the molding machine adapted to adopt at least a first open position wherein the mold and the counter mold are spaced apart and a closed position wherein one mold piece from the mold or the counter mold exerts force against the other mold piece and, wherein the movement of one mold piece from the mold or the counter mold in respect to the other mold piece is according to a displacement direction;*
- *a frame configured for supporting a thermo-formable plate;*
- *guiding means adapted to guide the frame according to the displacement direction;*
- *heating means configured for heating the thermo-formable plate;*
- *actuating means adapted to move the heating means at least between two positions, a first position close to the thermo-formable plate for heating the same and, a second position distant from the frame and the mold pieces for allowing the mold movement.*

The present system solves all the drawbacks identified above by departing from a first piece in the form of a thermo-formable plate, for example a composite plate formed by layers of fibers embedded in a thermo-formable material.

The present invention further comprises guiding means that allow the thermo-formable plate to be positioned in any of the intermediate positions between the mold and the counter mold since guiding means are adapted to guide the frame according to the displacement direction, even when the movement of the latter is horizontal.

The present invention also comprises heating means for heating the thermo-formable plate and permit its molding even in conditions where the material, on its own, would no longer be able to maintain its stable shape before being shaped.

The term "molding machine", as used in this context, shall be interpreted as a machine comprising actuation means for applying a force by means of elements intended to move the two supports at least in an open position and in a closed position. The force is applied to the part to be molded. In this particular case, the molding machine comprises two supports for supporting at least two molding parts, a first support adapted to receive a mold and, a second support adapted to receive a counter-mold.

When the molding machine moves a support, the mold part attached to said support also moves. According to the prior art, the support usually shows a fixing area allowing at least to fix the mold piece but, the area can be larger allowing to fix additional elements.

Also according to the prior art, the actuating means of the molding machine acts on one support while the other support is immovable.

The movement of one support with its mold part relative to the other support, with the other mold part, establishes the displacement direction. The most common displacement direction is longitudinal, either vertical or horizontal.

The molding machines that make use of a vertical displacement show a fixed support, preferably the lower one, and a movable support, preferably the upper one, because the action of gravity acting on the movable elements favors the downward force against the lower fixed support, and therefore against the mold piece also arranged lower.

According to the prior art, molding machines with a vertical displacement direction are preferred for the molding of plates formed by layers. The same is true for plates that include perimeter reinforcement to increase stiffness. With this machine configuration the plate rests supported on the bottom mold piece by the action of gravity and does not need to be fixed.

In these circumstances, when the upper mold is lowered, as soon as it contacts the plate, the latter is trapped between the mold and the counter-mold, so that the friction forces determine its subsequent position as well as the way its deformation progresses.

That is, control over the position and deformation of the plate is lost and finally by trial and error the best molding conditions are determined.

Advantageously, the presence of the frame in the first aspect of the invention configured to support the thermo-formable plate to be molded and the guiding means adapted to guide the frame according to the displacement direction allows the guiding of the position of the thermo-formable plate when fixed to the frame, without the need for the operator to come into direct contact with the plate, or, according to an embodiment, even facilitating it's tensioning thus avoiding its wrinkling as a result of the molding forces acting on the plate.

The element or elements responsible for the trajectory executed by the thermo-formable plate frame are the guiding means, those being responsible for the trajectory and also centering of the frame that holds the thermo-formable plate, so that it can perform its function without getting in the way in the second position of the molding machine. According to a possible embodiment, said frame has a shape and a size such that, when the molding machine in in the second position, the frame extends perimetrically outside the mold parts.

Since the guiding means are adapted to guide the thermo-formable plate frame according to the displacement direction, any force exerted by any of the pieces of the mold, the counter-mold or both on the plate will impose a displacement of the plate which will always be limited to the direction of displacement. This ensures its correct position but does not prevent the plate from adapting its position as the deformation imposed by the mold and the counter-mold progresses as the closing position is reached.

The guiding means also makes possible to carry out an optimal heating of the thermo-formable plate just before the molding process is executed. Since the guiding means allows the frame, and therefore the plate fixed to the frame, to be located at any position between the mold and the counter mold, this condition allows to keep a space between the plate and the mold pieces at both sides of the plate. This makes it possible to heat the surface of the thermo-formable plate when it is already held by the frame and in the required position for the process.

The actuating means are the means responsible of the movement of the heating means. Among their possible positions, there are at least, a first position close to the thermo-formable plate that allows raising its temperature, thus facilitating its subsequent deformation, and a second position further away from the thermo-formable plate, which prevents either the actuating means or the heating means to hinder the molding path, or alter the thermo-formable plate from correctly acquiring the shape imposed by the mold and the counter-mold.

The specific arrangement according to the invention further allows to carry out an optimal molding process since the thermo-formable plate loses the least possible amount of heat before the molding process since the heating process is carried out close to the molding position of the plate avoiding any mounting process of a preheated piece, out of the molding machine, like in the prior art.

According to a particular embodiment of the present invention, the *heating means are movable according to a direction perpendicular to the displacement direction.*

A preferred example where the heating means have more than one possible position with respect to the rest of the components belonging to the invention, is one in which these are disposed perpendicularly to the displacement direction, said displacement direction given by the path defined between the first and the second position of the mold, or the counter mold, or the path of the frame movement which support the thermo-formable plate.

This disposition allows equidistance between any of the points of the surface of the thermos-deformable plate and any point of the heating means, ensuring uniform heating of the surface of the thermo-formable plate. This arrangement also allows the heating medium to move independently with respect to the two mold parts; it is only necessary that the mold and counter mold be in an open position providing the space between each of these mold parts and the plate to locate the heating means.

According to another embodiment of the present invention, *the heating means comprise at least one infrared ceramic lamp,* which have the advantage, among others, of high durability and can be used 24 hours a day because their light scattering is UVA filtering.

According to a further embodiment of the present invention, *the system comprises at least one elastic deformable element that establishes the connection between the plate at one end and the frame at the opposite end.*

The at least one elastic deformable element act as connecting element between the frame and the thermo-formable plate, thus allowing its tensioning and correct positioning even during when the deformation of the plate progresses, without hindering the correct molding of the plate and avoiding the appearance of errors or wrinkles in the deformation of the thermo-formable plate due to its incorrect tensioning or positioning.

According to a further embodiment of the present invention, *the system comprises a plurality of elastic deformable joint elements distributed around the plate in order to connect a respective point of the thermo-formable plate with a respective point of the frame and also to provide stretch tension in the plate.*

According to this embodiment of the present invention, the deformable elastic joining elements are distributed along the contour of the frame, giving rise to the tensioning of the perimeter of the plate in the outward direction of the plate, and therefore favoring the correct molding of the thermo-formable plate without the appearance of wrinkles or possible errors.

That is, during the process of plate deformation, the plate is no longer contained in one plane and concave regions appear, which can cause wrinkles in the perimeter zone. The plurality of elastically deformable elements distributed perimetrically maintain a tensional state of the perimeter zone that tends to keep this region in a plane facilitating the closing of the mold and that the deformation of the plate inside is in accordance with the shape imposed by the mold and the counter-mold without the wrinkles giving rise to internal folds.

Moreover, their presence allows the spatial orientation of the assembly to be independent of the molding process and does not have to be considered for its correct functioning.

According to a possible embodiment, *the frame comprises one or more grooves and the at least one joint element is connected to the thermo-formable plate through the groove wherein the groove extends transversely to the displacement direction connecting the first and second ends of said joint element.*

The connecting elements are connected to the frame when supporting the thermo-formable plate. These grooves are arranged transversely to the direction stablished by the two ends of the connecting element, one end connected to the plate and the opposite end connected to the frame by means of the groove. This second connection allows to adjust the direction of tension applied on the plate according to a plane perpendicular to the direction of displacement. Since the tensioning direction of the joint element is perpendicular to the groove, even if the end of the joint element connected to the frame moves, its position is stable and does not tend to move to other locations along the groove.

According to another embodiment of the present invention, *the system does not have any elastic deformable element for establishing the connection between the plate and the frame; and instead the thermo-formable plate comprises respective connection portions distributed in respective positions along its perimeter. The connection between the thermo-formable plate and the inner part of the frame is performed by means of a respective fixing pin that is positioned between a respective connection portion of the thermo-formable plate and a respective point of the inner part of the frame. Preferably, said connection portions of the plate extends outwards.*

In the invention, *the displacement direction is horizontal.*

According to this example of realization, the frame rests on the shanks without any tendency to move towards the mold or the counter-mold, so that the distance between the frame and the mold or the distance between the frame and the counter-mold remains stable before closing the mold parts, thus facilitating the entry of the heating means. Another advantage of this arrangement is that when the frame makes use of slots or openings of converging configuration supporting a shank, the action of gravity tends to pull the shank to the extreme position of the slot.

According to a preferred embodiment, *the frame is extended along a main plain, the plain of the thermo-formable plate when fixed to the frame.*

According to another embodiment, *the frame is adapted to be positioned perpendicular to the displacement direction.*

In the invention, *the guiding means comprise a shank oriented in the displacement direction and fixed to one support at one end of the molding machine in a cantilever manner, the shank being further adapted for sliding the frame through an aperture of the frame.*

The guiding means are preferably a rod or a shank which is preferably arranged in a cantilevered arrangement. This shank is fixed at one end to the molding machine support through one of the ends. It has already been described above that the molding machine support usually has a larger area than the mold or counter mold so that fixing at some point in this extra area is possible.

According to another embodiment, *the guiding means comprise a spring and the shank comprises a stopper, being the stopper located at one end of the shank, wherein the frame when installed in the guiding means is positioned between the stopper and the spring according to the displacement direction.*

The guiding means may also comprise at least one spring. The at least one spring is oriented in the displacement direction (D) and, according to an embodiment, it butts against the support at one end of the molding machine and, the opposite end is proximal to the frame.

According to an embodiment, the frame comprises a slot or aperture intended to house the guiding means, particularly a rod or a shank. In a preferred embodiment, when the guiding means are a rod or a shank, the rod or shank is limited by an abutting element or stopper preferably located at the end in cantilever condition.

The stopper prevents the frame from slipping out of the guiding means and the spring causes a tendency on the frame so that it adopts a position close to the stopper. Therefore, the frame may move freely between the stopper and the spring.

In addition, it should be mentioned that the frame in a preferred example would be located perpendicular to the displacement direction, so that the plate is positioned parallel to the mold and the counter-mold. That way is more accurate to carry out its deformation, and no wrinkles are formed when closing the two parts of the mold.

Moreover, according to an embodiment the guiding means are made up of a spring and one or more shanks or rods. When the spring is compressed, the frame is forced to show a single position when forced by the mold parts during the closing process since the spring exerts a force against the frame that tends to pull it to one side only.

That is, the frame can move between the spring end and a stopper along its path parallel to the displacement direction except during the mold closing process where the spring exerts a force that prevents the frame from moving freely over the range of distances between which it would move freely without the spring.

In the invention, *the frame comprising at least an aperture with a region of support for shank that is convex, and the convex region being oriented downwardly according to the vertical direction established by the direction of gravity.*

In a preferred example, the frame comprises one or more convex apertures or openings that allow the rod (or shank) or rods to pass through. The convex region of the opening is oriented downwardly, taking as a reference a vertical axis to the direction set by gravity. This configuration facilitates the perfect positioning of the frame by its own weight and also the limitation of its degrees of freedom. This ensures the correct trajectory of the frame and alignment with the molding machine throughout the opening and closing process.

The wider part of the opening allows a quick installation of the frame with the plate since it is sufficient to fit inside the shank, for example through the stopper. The special configuration of the opening is what establishes its correct positioning without requiring any action by an operator.

In the specific embodiment of another preferred example, the frame comprises one or more openings. A shank, among a plurality of shanks, passes through each of these openings.

In the invention, *the aperture is teardrop-shaped, with the narrowest part of the teardrop-shape located in the upper part of the aperture.*

Furthermore, in a preferred example each of the openings has a tear-shaped contour oriented downwards, taking as a reference the vertical axis established by the direction of gravity. This is another specific case that allows limiting the degrees of freedom of the frame in respect to the rod or shank passing through the respective opening since the frame tends to move in the direction of gravity due to weight.

The molding of each one of the plates requires a previous heating of them, so that the material opposes less resistance at the time of carrying out the molding and thus to facilitate the process as well as to obtain more accurate results. This is possible thanks to the presence of heating means, a system that allows the preheating of the plate without hindering the manufacturing process. For this purpose, they comprise two elements spaced apart, thus making it possible to heat the plate from both sides, facing the heat-emitting surfaces on both sides of the plate to be molded.

According to an embodiment, *the heating means comprise at least two elements distanced from each other adapted to be facing both sides of the plate.*

In this embodiment, the distance from one heating element and the other heating element allows to house at least the plate wherein both sides of the plate are accessible to the heating means. This configuration facilitates the heating of the plate in an effective manner in both sides simultaneously and the plate being at a location appropriate for closing the two mold parts with no need of expending extra time installing the heated plate in the mold machine.

By avoiding this extra time it is also possible to avoid having to raise the temperature of the plate excessively to temperatures that could degrade the properties of the plate material.

According to an embodiment, *the distance between the two elements of the heating means is adjustable.*

This feature allows a simple regulation of the heat reaching the plate without having to vary the temperature of the heat source. In addition to its simple displacement before closing between the mold and the counter-mold, so as not to hinder its contact with the plate to be molded. The minimum distance between the two elements must be such that such movement of the heating means allowing the subsequent closing of the two mold parts is not prevented.

According to an embodiment, *the heating means comprise at least two heating sources, wherein at least one heating source is activable in an independent manner.*

When the different heat sources belonging to the heating means are activated independently then these heating means also allow for the regulation of the amount of heat transmitted to the plate.

In another preferred example, either *the mold or the counter mold or both are manufactured by additive manufacturing, preferably by waam (wire arc additive manufacutring), so that there is the presence of interior ducts within the molding part or parts. As there is some thermal fluid inside, it favors both the heating and cooling process.*

The cooling process occurs through the contact of the mold with the plate to be molded, once the closing between mold and counter-mold occurs, enclosing the plate between them.

That is, during the closing phase of the two parts of the mold the plate is hot allowing its deformation. It is in this phase of closing of the two parts of the mold when there is an interaction with the plate and where all the deformation takes place. During this phase the two mold parts must also be at a high temperature in order not to cool the hot plate, since cooling during the deformation phase would harden the plate locally and cause breakage or at least defects.

In order for the mold and the counter-mold to be at a high temperature, a previous heating stage is necessary, for which a hot fluid is introduced through the internal channels.

Once the plate has acquired its final shape after the deformation process by the closing of the mold and the counter-mold, it is necessary to cool both parts of the mold to achieve again the rigidity of the molded part.

In view of these stages, the manufacturing time of a piece depends on the time required to heat the mold parts and also on the time required to cool the mold parts again after closing the mold. The overall efficiency of the process will depend on the ability to reduce these two times, which are proportional to the thermal inertia of both.

According to a preferred embodiment of the invention, in order to reduce thermal inertia and optimize the circuits, the molds (i.e. mold and a counter mold) are heated using thermal fluid flowing through internal ducts with an optimized path, through molds printed using additive manufacturing techniques. The additive manufacturing of the mold and the counter-mold allows to eliminate in the design phase material that would be present when manufacturing them from a metal block that is subsequently machined according to the state of the art but, which is not structurally necessary. This is a first factor that reduces thermal inertia.

Likewise, through additive manufacturing it is possible to configure internal ducts that adapt to complex shapes giving rise to channels and cavities that also reduce the volume of metal in the mold and, therefore, being a second factor that reduces thermal inertia. The separation walls of the mold and the counter-mold between the internal ducts and the heat exchange surface by contact with the plate can be smaller and moreover constant even if the shapes to be adopted by the plate are complicated.

In a preferred example, the thermal fluid used through the ducts flowing inside the counter-mold or both, is oil, as it prevents the phenomenon of thermal shock, and possible state changes, from occurring.

In another preferred example, the inner ducts comprise a portion of their interior adapted to the outer shape of the mold surface, so that heat transfer is optimized.

In a second aspect, the present invention provides *a method for manufacturing molded pieces by means of the system defined previously, wherein the method comprises the steps:*
*a) installing a thermo-formable plate in the frame;*
*b) installing the frame in the guiding means while the molding machine is in open position;*
*c) positioning the heating means in the first position, the heating means being activated for heating the thermo-formable plate;*
*d) positioning the heating means in the second position;*
*e) positioning the molding machine in the closed position, the two mold pieces exerting force on the thermo-formable plate;*
*f) positioning the molding machine in the open position and removing the frame;*
*g) removing the molded thermo-formable plate from the frame.*

According to an embodiment of the method, firstly the thermo-formable plate is placed on the frame by means of its connecting elements. Then the frame is installed into the guiding means while the molding machine is in its open position, so that it is in a fixed orientation with the displacement direction as the only degree of freedom. Then the heating means are placed close to the plate to raise its temperature, and once this process is finished, they are placed in a second position that does not obstruct the closing between the mold and the counter mold.

According to an embodiment, the mold and the counter-mold are also heated for avoiding to cool the thermo-formable plate two fast when both are closed causing the deformation of the plate.

At this point the molding machine is already in optimal conditions to close and deform the thermo-formable plate to the desired shape. Once the plate has been deformed, the mold and the counter-mold are cooled down in order to increase the rigidity of the deformed thermo-formable plate. Then the molding machine separates the two mold parts and the frame is removed from the molding machine assembly. Secondly the plate already molded with the desired shape is separated from the frame.

Additional steps may be needed depending on the specific manufactured piece, for instance cutting a perimetral part of the molded piece since such perimetral part has been only useful for supporting the thermo-formable plate with the frame.

### DESCRIPTION OF THE DRAWINGS

These and other features and advantages of the invention will be seen more clearly from the following detailed description of a preferred embodiment provided only by way of illustrative and non-limiting example in reference to the attached drawings.
- Figure 1: This figure shows a perspective view of an embodiment of a system for manufacturing a molded thermo-formable plate.
- Figure 2: This figure shows a perspective view of an embodiment of the inner part of the system shown in figure 1, at least comprising the first support, the second support, the mold and the counter mold with the thermo-formable plate located therebetween.
- Figure 3, 4: These figures show a perspective view of an embodiment of heating means configured to be installed in the system for manufacturing a molded thermo-formable plate. Figure 4 shows heating means in a first position located out of the frame supporting the thermo-formable plate and, figure 5 shows the same in a second position configured to heat the thermo-formable plate.
- Figure 5: This figure shows a perspective view of an embodiment of the first support and the second support of the mold parts without the mold parts and, both being in a closed position. The first support comprises four shanks for supporting the frame.
- Figure 6: This figure shows a perspective view of an embodiment of the first support and the mold showing the four shanks.
- Figure 7: This figure shows a perspective view of an embodiment of a frame and a thermo-formable plate joined with a pin.
- Figure 8: This figure shows a perspective view of an embodiment of a frame and a thermo-formable plate joined with a plurality of elastic deformable joint elements distributed around the thermo-formable plate.

### DETAILED DESCRIPTION OF THE INVENTION

As will be appreciated by one skilled in the art, aspects of the present invention may be embodied as a system or a method.

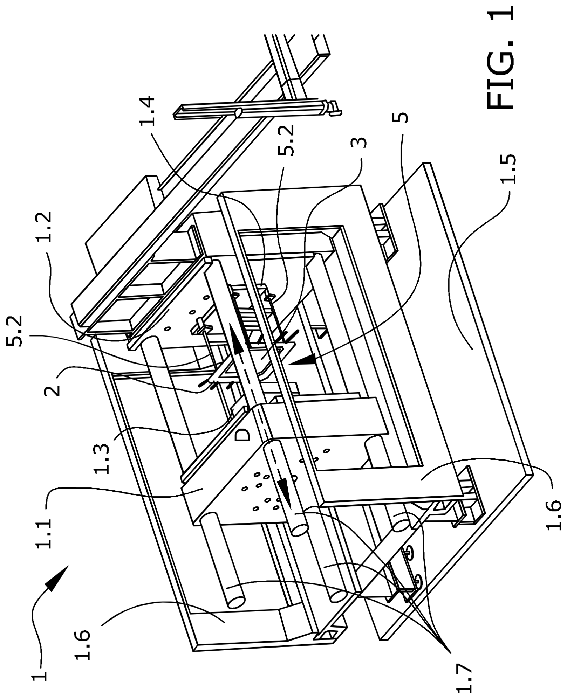

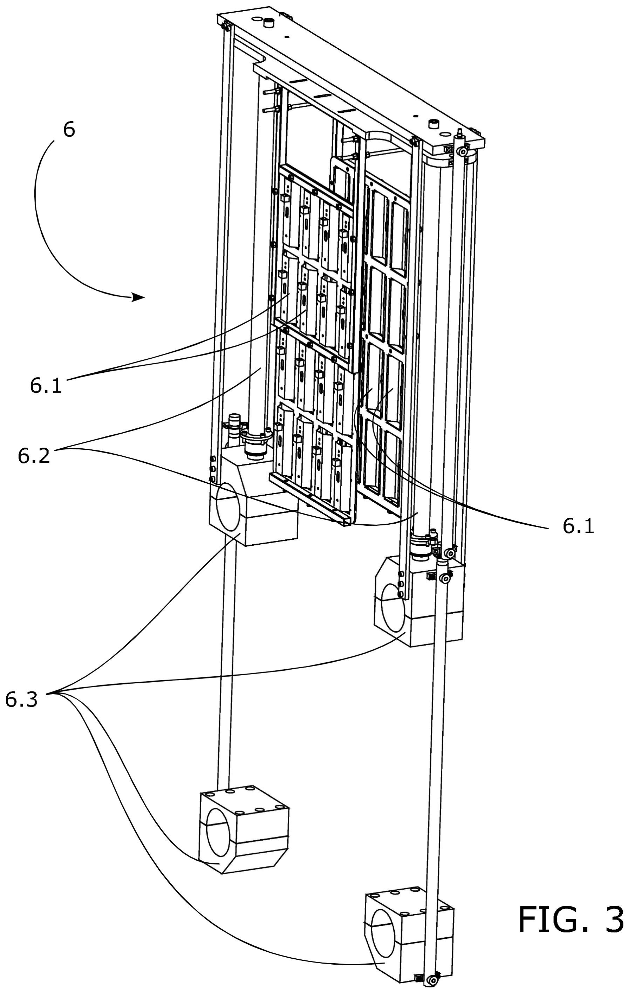

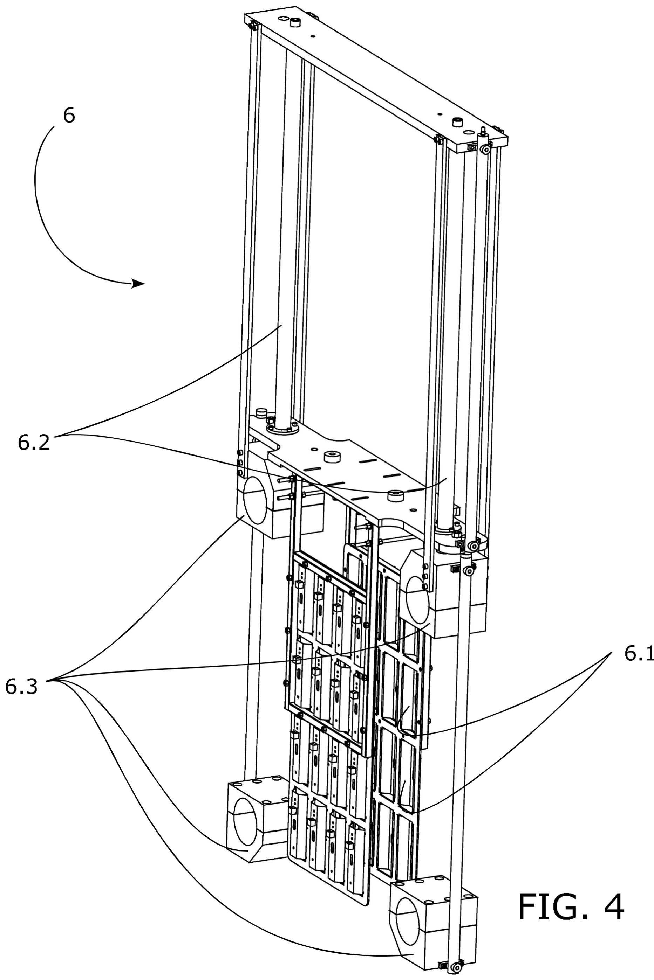

Figure 1 depicts system for manufacturing molded pieces departing form a thermo-formable plate (3) according to a first embodiment of the invention. In this first example, system for manufacturing molded pieces is configured by the following elements:
- a molding machine (1);
- a frame (2) configured for supporting a thermo-formable plate (3);
- guiding means (5) adapted to guide the frame (2) according to a displacement direction (D);
- heating means (6) (not shown in figure 1 but shown in figures 3 and 4) configured for heating the thermo-formable plate (3); and
- actuating means (6.2) adapted to move the heating means (6) at least between two positions, a first position close to the thermo-formable plate (3) for heating the same and, a second position distant from the frame (2) and the mold pieces (1.3, 1.4) for allowing the mold movement (D).

In the example of Figure 1, the molding machine (1) comprises a base (1.5) for supporting an upper main structure that supports two supports (1.1, 1.2) identified as a first support (1.1) and a second support (1.2) for supporting two mold pieces (1.3, 1.4) also identified as a mold (1.3) and a counter mold (1.4) respectively. Furthermore, according to this embodiment two lateral parts (1.6) having a respective central apertures are also part of the main structure of this example allowing an easy access to the mold parts (1.3 ,1.4) and other inner components while protecting the operator.

Figure 1 does not show heating means (6) in order to have a clean view of the inner components located between the mold parts (1.3, 1.4). Figure 1 shows four big bars (1.7) allowing a guided movement of the first support (1.1) for moving the mold (1.3) in respect to the second support (1.2) according to the displacement direction (D). In this specific example displacement direction is horizontal being vertical direction perpendicular to the horizontal direction and, vertical direction defined by the direction of any force caused by gravity.

The displacement of the first support (1.1) towards the second support (1.2) causes the displacement of the mold (1.3) towards the counter mold (1.4) closing the mold parts (1.3, 1.4).

During the movement of the first support (1.1), part of the big bars (1.7) on either side of the first support (1.1) are accessible. In particular a portion next to the second support (1.2).

The heating means 6 can be better appreciated in figures 3 and 4 wherein four supporting means (6.3) are configured to be fixed to the four big bars (1.7).

According to the embodiment shown in figure 3 and 4, heating means (6) comprises two elements with the purpose of placing each of the elements on either side of the thermal-deformable plate (3) allowing to heat both faces of said thermal-deformable plate (3).

In this embodiment, each element comprises a plurality of lamps (6.1) generating heat. The two elements of the heating means (6) shows a distance that is adjustable allowing to adjust the heat received by the thermo-formable plate (3).

**In** this embodiment, a further manner to adjust the heat received by the thermo-formable plate (3) is by activating a selection of lamps (3), preferably the activated lamps (3) being uniformly distributed preventing the overheating of a local area of the thermal-deformable plate (3).

In this example the lamps (6.1) are infrared ceramic lamps very effective heating black pieces as those made of carbon fiber.

Figure 3 shows a vertical structure keeping the plurality of lamps (6.1) located in a first position wherein the upper part comprising the plurality of lamps (6.1) is away from the supporting means (6.3), and therefore, in operative manner away from the frame (2) supporting the thermo-formable plate (3).

Figure 4 shows a second position of the heating means (6) wherein the plurality of lamps (6.1) is a lower position located in the inner region delimited by the supporting means (6.3) and, therefore located where the region destined to house the part to be molded is located.

The heating means (6) comprise actuating means (6.2) responsible for acting on the structure supporting the plurality of lamps (6.1) by moving it between the two end positions shown in figure 3 and 4 respectively.

When the lamp assembly (6.1) is in the position shown in Figure 3, that is, in an elevated position, the mold (1.3) and the counter mold (1.4) can move by opening and closing without interference between the mold parts (1.3, 1.4) and the lamps (6).

In the first position of the heating means (6), with the lamps (6.1) in the raised position, it is possible to locate the frame (2) with the thermo-formable plate (3) fixed to it (2). Once the frame (2) with the thermo-formable plate (3) is in place, the heating means (6) are lowered until the lamps (6.1) are positioned on either side of the thermo-formable plate (3). In this position and the lamps (6.1) activated the temperature of the thermo-formable plate (3) is raised, making it capable of large deformations under force.

With this configuration, rapid withdrawal of the lamps (6.1) is possible because the actuating means (6.2) raise the lamps (6.1) to a height that does not interfere with the closing of the mold (1.3) towards the counter mold (1.4) with no further operations allowing to close the mold (1.3) and the counter mold (1.4) before the heated thermo-formable plate (3) is cooled again.

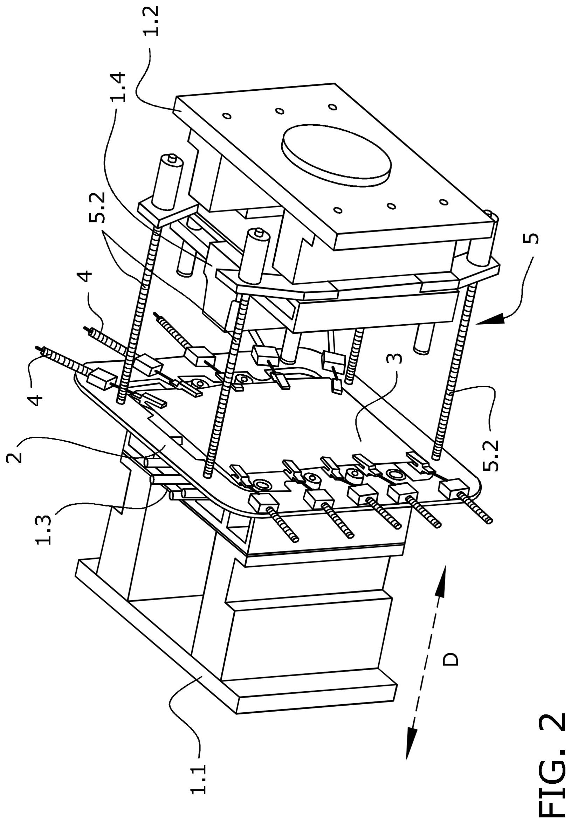

Figure 2 shows a detail of the elements identified in Figure 1 but with an enlarged view in the area where the mold (1.3) and the counter mold (1.4) are located.

This view of figure 2 shows the first support (1.1) with the mold (1.3) and the second support (1.2) with the counter mold (1.4) spaced apart.

Four shanks (5.1) emerge horizontally from the second support (1.2) in a cantilevered position. Each of the shanks (5.1) has a spring (5.2) around the shank (5.1) so that the spring (5.2) is guided in its compression deformation when it occurs avoiding it from bending.

Each of the shanks (5.1) shows at the free end an stopper (5.3), in this example in the form of a disk of larger diameter than the diameter of the shank (5.1). The spring (5.3) has a shorter length than the stopper (5.3) leaving a section of the shank (5.1) free.

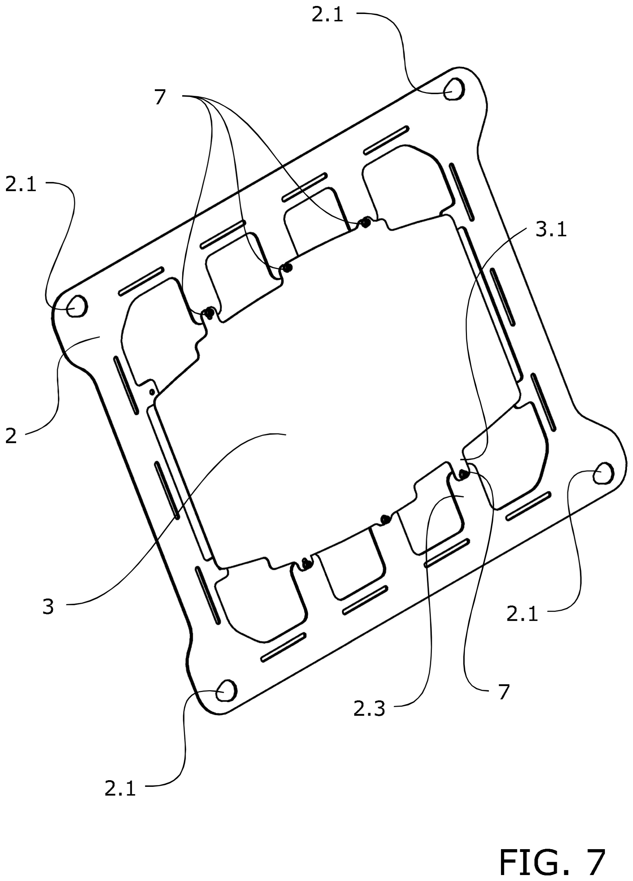

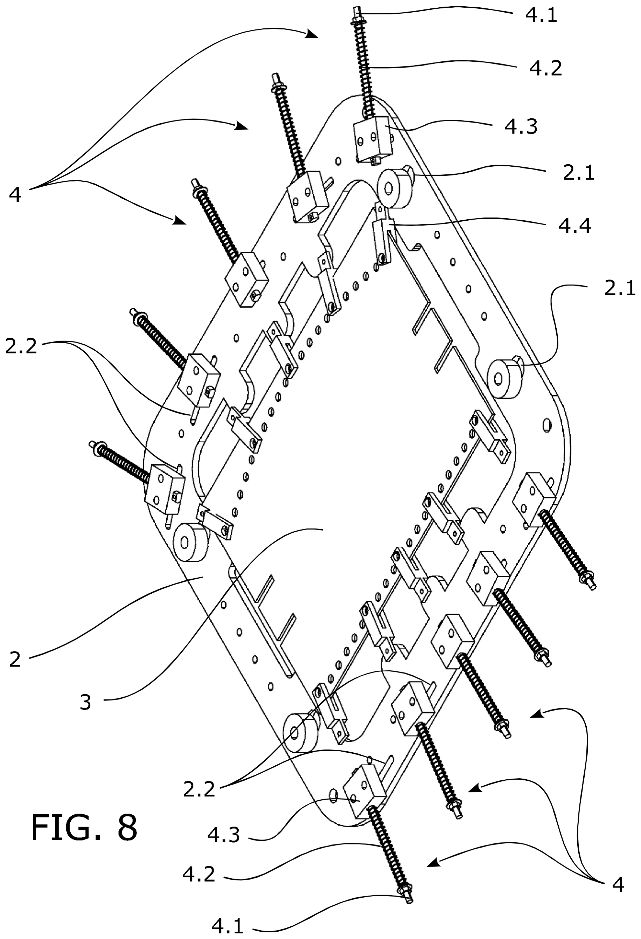

The frame (2), as shown in figures 7 and 8, have openings (2.1) intended to allow the passage of the shank (5.1) and also the passage of the stopper (5.3) in order to install the frame (2) in the plurality of shanks (5.1).

The frame (2) is located between one end of the spring (5.2) and the stopper (5.3). If the spring (5.2) has sufficient length then the spring (5.2), according to an embodiment, can maintain a forcing action against the stopper (5.3).

According to a preferred example, the openings (2.1) have a teardrop shape with the most restriction region located in the part which, in operative form, is located in the upper part according to the action of gravity. With this configuration, the action of the weight on the frame (2) and the thermo-formable plate (3) tends the frame (2) to descend and the shank (5.1) to be located in the narrow, convergent region of the teardrop. This tendency to position itself in the convergent region means that the natural tendency of the frame (2) is to position itself in a single position making the adjustment of its position automatic.

Another function of the spring (5.2) is to place the position of the frame (2) in an orientation as close to perpendicular to the displacement direction (D) as possible.

Another function of the spring (5.2) is to position, according to the displacement direction (D), the frame (2) in a predetermined position that leaves space on either side of the frame (2) so that the two spaced elements of the heating means (6) can be lowered leaving the frame (2) between them safely and without mechanical interference.

Figure 2 shows the position of the frame (2) in a position close to the free end of the shanks (5.1) due to the action of the springs (5.3).

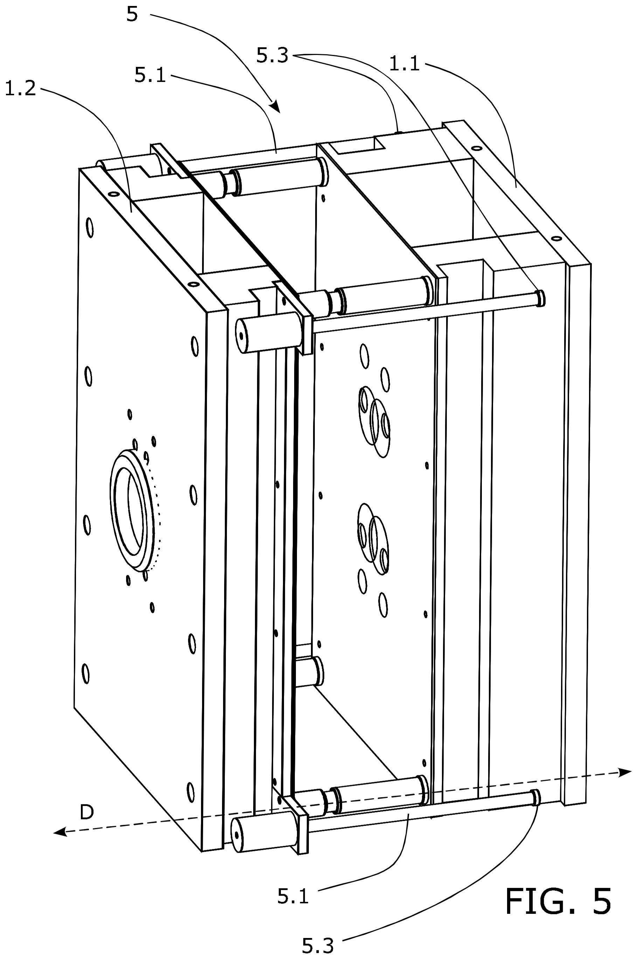

Figure 5 shows the first support (1.1) and the second support (1.2) in a close-up position where the mold (1.3) and the counter-mold (1.4) have been withdrawn to show the remaining elements in detail.

In particular, mold guiding nipples are shown to ensure in the approach that the fit between mold (1.3) and counter mold (1.4) is precise.

Also shown are the four cantilevered shanks (5.1) extending from their fixed end to the cantilevered end, the one with the stopper (5.3). The length of the shank (5.1) is sufficient so that the frame (2) can adopt any intermediate position in the movement of the mold (1.3) forcing also the movement of the thermo-formable plate (3) attached to the frame (2).

That is, at the moment of closing the mold (1.3) towards the counter mold (1.4) the frame (2) keeps the thermo-formable plate interposed between the two pieces of the mold (1.3, 1.4) ensuring the correct positioning.

Even when the thermo-formable plate (3) comes into contact with the mold (1.3) and the counter-mold (1.4) the thermo-formable plate (3) is still retained by the frame (2) allowing the thermo-formable plate (3) to deform but always maintaining the position for which it has been designed without any modification of this position from one molded piece to another.

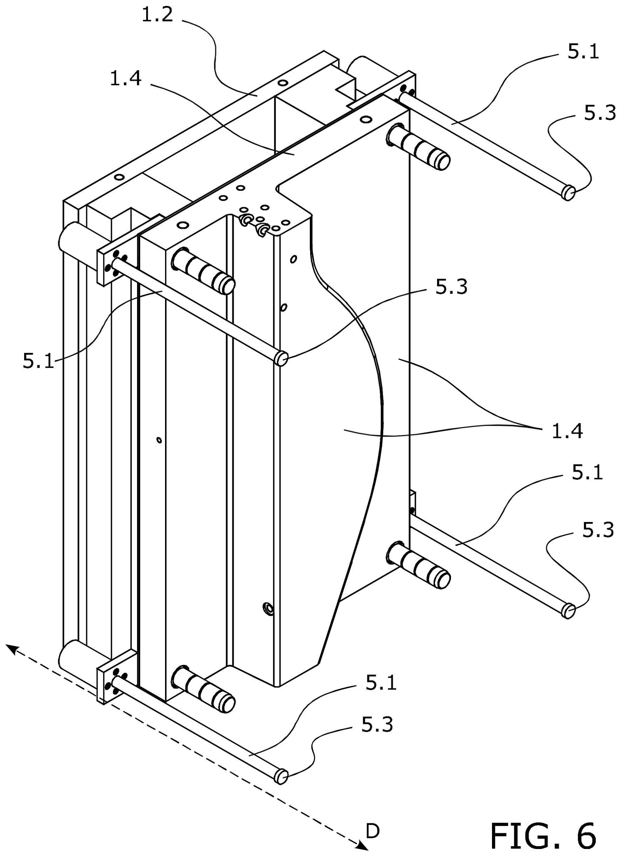

Figure 6 shows the second support (1.2) with the counter mold (1.4) attached to it to show the shanks (5.1) of the guiding means (5) more clearly. In this specific case the counter mold (1.4) has a vertical projection shape with a central flaring. This shape is complementary to the shape of the mold (1.3) not shown in this figure. The shanks (5.1) in this embodiment are not fixed to the counter-mold (1.4) but are fixed to the second support (1.2) although the movement of all the parts shown in this figure is the same.

Figure 7 shows a first example of attachment between the frame (2) and the thermo-formable plate (3). The fastening incorporates connection portions (2.3) located in the inner area of the frame (2). In this way the connection portions (2.3) extend into the inner area of the frame (2).

Likewise, in this embodiment, the thermo-formable plate (3) has projections towards its perimeter zone with points of joint with points of the connection portions (2.3) of the frame (2). These joints are carried out by means of fixing pins (7).

When the mold (1.3) moves towards the counter-mold (1.4) with the thermo-formable plate (3) between them, there is a first approach phase in which it may not even contact the thermo-formable plate (3). Once the mold (1.3) contacts the thermo-formable plate (3) between the thermo-formable plate (3) and the counter mold (1.4) there may be a free space. By advancing the displacement of the mold even further a configuration is reached in which a part of the thermo-formable plate (3) is in contact with the mold (1.3) and, another part of the thermo-formable plate (3) are in contact with the counter mold (1.4). From this point, the advance of the mold (1.3) generates stresses in the thermo-formable plate (3) that cause its deformation and a tendency to move both in the direction of displacement (D) and in its orientation.

Since the frame (2) is guided by the guiding means (5) in the direction of displacement (D), the frame (2) moves towards the counter mold (1.4) but always being located at a point where the forces of the mold (1.3) and the counter mold (1.4) reach an equilibrium in the direction of displacement (D) while the frame (2) and the guiding means (5) always ensure its orientation perpendicular or almost perpendicular to the direction of displacement (D).

The tensile stresses between the thermo-formable plate (3) and the frame (2) can be very high depending on the shape of the part to be molded.

Figure 8 shows another embodiment where the connection between the thermo-formable plate (3) and the frame (2) has elastically deformable means (4) that allow very high deformations of the thermo-formable plate (3) without such deformations being transmitted directly to the frame (2) and, while maintaining a tensile stress between the thermo-formable plate (3) and the frame (2).

In this embodiment, Figure 8 shows the elastically deformable means (4) fixed to the frame (2) in the form of plates (4.3) fixed to the frame (2) which let pass through a perforation a traction bar (4.1) intended to connect with another joint piece (4.4) with the thermo-formable plate (3). The traction bar (4.1) is tractioned by a spring (4.2) which tends to maintain a traction force on the thermo-formable plate (3). In Figure 8, the bars (4.1) have been disconnected from the joint parts (4.4) fixed to the thermo-formable plate (3) to show the extended spring (4.2) and the details of each part.

The joint pieces (4.4) attached to the thermo-formable plate (3), in this example embodiment, have the ability to rotate relative to the thermo-formable plate (3) to reduce stresses.

According to another embodiment, the joint between the plate (4.3) through which the bar (4.1) for fixing the connecting piece (4.4) passes is in a groove (2.2) of the frame (2) in the form of a slot. The groove (2.2) allows the point of joint between the plate (4.3) and the frame (2) not to be predetermined and to be located where the least stress occurs during the progress of deformation of the thermo-formable plate (3).

According to another embodiment, the groove (2.2) of the frame (2) extends in a direction contained in the main plane of the frame (2) but transverse to the direction taken by the bar (4.1) pulling the thermo-formable plate (3) to ensure the stability of the joint.

### Additional embodiments

Additional embodiments of the invention are listed below as clauses.

Clause 1.- A system for manufacturing molded pieces by means of:
- a molding machine (1) comprising two supports (1.1, 1.2) for supporting two mold pieces (1.3, 1.4), a first support (1.1) adapted to receive a mold (1.3) and a second support (1.2) adapted to receive a counter mold (1.4), the molding machine (1) adapted to adopt at least a first open position wherein the mold (1.3) and the counter-mold (1.4) are spaced apart and a closed position wherein one mold piece (1.3, 1.4) exerts force against the other mold piece (1.4, 1.3) and, wherein the movement of one mold piece (1.3, 1.4) in respect to the other mold piece (1.4, 1.3) is according to a displacement direction (D);
- a frame (2) configured for supporting a thermo-formable plate (3);
- guiding means (5) adapted to guide the frame (2) according to the displacement direction (D);
- heating means (6) configured for heating the thermo-formable plate (3);
- actuating means (6.2) adapted to move the heating means (6) at least between two positions, a first position close to the thermo-formable plate (3) for heating the same and, a second position distant from the frame (2) and the mold pieces (1.3, 1.4) for allowing the mold movement (D).

Clause 2.- A system according to clause 1, wherein the heating means (6) are movable according to a direction perpendicular to the displacement direction (D).

Clause 3.- A system according to any of previous clauses, wherein the heating means (6) comprise at least one infrared ceramic lamp (6.1).

Clause 4.- A system according to any of previous clauses, which comprises at least one elastic deformable joint element (4) that establishes the connection between the thermo-formable plate (3) at one end and the frame (2) at the opposite end.

Clause 5.- A system according to clause 4, wherein it further comprises a plurality of elastic deformable joint elements (4) distributed around the thermo-formable plate (3) in order to connect a respective point of the thermo-formable plate (3) with a respective point of the frame (2) and also to provide stretch tension in the plate (3).

Clause 6.- A system according to clauses 4 or 5, wherein the frame (2) comprises one or more grooves (2.2) and the at least one joint element (4) is connected to the thermo-formable plate (3) through the groove (2.2) wherein the groove (2.2) extends transversely to the displacement direction (D) connecting the first and second ends of said joint element (4).

Clause 7.- A system according to any of clauses 1 to 3, wherein the thermo-formable plate (2) comprises respective connection portions (2.3) distributed in respective positions along its perimeter and, wherein the connection between the thermo-formable plate (2) and the inner part of the frame (3) is performed by means of a respective fixing pin (7) that is positioned between a respective connection portion (2.3) of the thermo-formable plate (2) and a respective point (3.1) of the inner part of the frame (3).

Clause 8.- A system according to any of previous clauses, wherein the displacement direction (D) is horizontal.

Clause 9.- A system according to any of previous clauses, wherein the frame (2) is extended along a main plain, the plain of the thermo-formable plate (3) when fixed to the frame (2).

Clause 10.- A system according to any of previous clauses, wherein the frame (2) is adapted to be positioned perpendicular to the displacement direction (D).

Clause 11.- A system according to any of previous clauses, wherein the guiding means (5) comprise a shank (5.1) oriented in the displacement direction (D) and fixed to one support at one end of the molding machine (1) in a cantilever manner, the shank (5.1) being further adapted for sliding the frame (2) through an aperture of the frame (2.1).

Clause 12.- A system according to the previous clause, where the guiding means (5) comprise a spring (5.2) and the shank (5.1) comprises a stopper (5.3), being the stopper (5.3) located at one end of the shank (5.1), wherein the frame (2) when installed in the guiding means (5) is positioned between the stopper (5.3) and the spring (5.2) according to the displacement direction (D).

Clause 13.- A system according to clause 11 or 12, wherein the frame (2) comprising at least an aperture with a region of support for shank (5.1) that is convex, and the convex region being oriented downwardly according to the vertical direction established by the direction of gravity.

Clause 14.- A system according to the previous clauses, where the aperture is teardrop-shaped, with the narrowest part of the teardrop-shape located in the upper part of the aperture.

Clause 15.- A system according to any of previous clauses, wherein the heating means (6) comprise at least two elements distanced from each other adapted to be facing both sides of the thermo-formable plate (3).

Clause 16.- A system according to the previous clause, wherein the distance between the two elements of the heating means (6) is adjustable.

Clause 17.- A system according to any of previous clauses, wherein the heating means (6) comprise at least two heating sources, wherein at least one heating source is activable in an independent manner.

Clause 18.- A system according to any of previous clauses, wherein the mold (1.3) , the counter mold (1.4) or both mold pieces (1.3, 1.4) is manufactured by additive manufacturing, preferably by waam; and, the mold piece/pieces (1.3, 1.4) comprises internal ducts for conducting a thermal fluid, wherein the internal ducts are for the heating and/or cooling process.

Clause 19.- A system according to clauses 1 and 16, wherein the internal ducts comprises an internal portion that mimics the shape of at least a portion of the surface adapted to be in contact with the thermo-formable plate (3).

Clause 20.- A method for manufacturing molded pieces by means of a system according to any of previous clauses, wherein the method comprises the steps:
a) installing a thermo-formable plate (3) in the frame (2);
b) installing the frame (2) in the guiding means (5) while the molding machine (1) is in open position;
c) positioning the heating means (6) in the first position, the heating means (6) being activated for heating the thermo-formable plate (3);
d) positioning the heating means (6) in the second position;
e) positioning the molding machine (1) in the closed position, the two mold pieces (1.3, 1.4) exerting force on the thermo-formable plate (3);
f) positioning the molding machine (1) in the open position and removing the frame (2);
g) removing the molded thermo-formable plate (3) from the frame (2).

Clause 21.- A method according to previous clause, wherein before positioning the molding machine in the open position and removing the frame (2), the mold (1.3) and the counter mold (1.4) are cooled down in order to increase the rigidity of the deformed thermo-formable plate (3).

Clause 22.- A method according to any of clauses 20 to 21, wherein before positioning the molding machine in the closed position, the mold (1.3) and the counter mold (1.4) are heated.

## Claims

1. A system for manufacturing molded pieces by means of:
- a molding machine (1) comprising two supports (1.1, 1.2) for supporting two mold pieces (1.3, 1.4), a first support (1.1) adapted to receive a mold (1.3) and a second support (1.2) adapted to receive a counter mold (1.4), the molding machine (1) adapted to adopt at least a first open position wherein the mold (1.3) and the counter-mold (1.4) are spaced apart and a closed position wherein one mold piece (1.3, 1.4) exerts force against the other mold piece (1.4, 1.3) and, wherein the movement of one mold piece (1.3, 1.4) in respect to the other mold piece (1.4, 1.3) is according to a displacement direction (D);
- a frame (2) configured for supporting a thermo-formable plate (3);
- guiding means (5) adapted to guide the frame (2) according to the displacement direction (D);
- heating means (6) configured for heating the thermo-formable plate (3);
- actuating means (6.2) adapted to move the heating means (6) at least between two positions, a first position close to the thermo-formable plate (3) for heating the same and, a second position distant from the frame (2) and the mold pieces (1.3, 1.4) for allowing the mold movement (D);
wherein the displacement direction (D) is horizontal, and
the system is further **characterized in that**:
- the guiding means (5) comprise a shank (5.1) oriented in the displacement direction (D) and fixed to one support at one end of the molding machine (1) in a cantilever manner, the shank (5.1) being further adapted for sliding the frame (2) through an aperture of the frame (2.1), and
- the frame (2) comprises at least an aperture with a region of support for the shank (5.1) that is convex, and the convex region being oriented downwardly according to the vertical direction established by the direction of gravity; where the aperture is teardrop-shaped, with the narrowest part of the teardrop-shape located in the upper part of the aperture.

2. A system according to claim 1, wherein the heating means (6) are movable according to a direction perpendicular to the displacement direction (D).

3. A system according to any of previous claims, wherein the heating means (6) comprise at least one infrared ceramic lamp (6.1).

4. A system according to any of previous claims, which comprises at least one elastic deformable joint element (4) that establishes the connection between the thermo-formable plate (3) at one end and the frame (2) at the opposite end.

5. A system according to claim 4, wherein it further comprises a plurality of elastic deformable joint elements (4) distributed around the thermo-formable plate (3) in order to connect a respective point of the thermo-formable plate (3) with a respective point of the frame (2) and also to provide stretch tension in the plate (3).

6. A system according to claims 4 or 5, wherein the frame (2) comprises one or more grooves (2.2) and the at least one joint element (4) is connected to the thermo-formable plate (3) through the groove (2.2) wherein the groove (2.2) extends transversely to the displacement direction (D) connecting the first and second ends of said joint element (4).

7. A system according to any of claims 1 to 3, wherein the thermo-formable plate (2) comprises respective connection portions (2.3) distributed in respective positions along its perimeter and, wherein the connection between the thermo-formable plate (2) and the inner part of the frame (3) is performed by means of a respective fixing pin (7) that is positioned between a respective connection portion (2.3) of the thermo-formable plate (2) and a respective point (3.1) of the inner part of the frame (3).

8. A system according to any of previous claims, wherein the frame (2) is extended along a main plain, the plain of the thermo-formable plate (3) when fixed to the frame (2).

9. A system according to any of previous claims, wherein the frame (2) is adapted to be positioned perpendicular to the displacement direction (D).

10. A system according to claim 1, where the guiding means (5) comprise a spring (5.2) and the shank (5.1) comprises a stopper (5.3), being the stopper (5.3) located at one end of the shank (5.1), wherein the frame (2) when installed in the guiding means (5) is positioned between the stopper (5.3) and the spring (5.2) according to the displacement direction (D).

11. A system according to any of previous claims, wherein the heating means (6) comprise at least two elements distanced from each other adapted to be facing both sides of the thermo-formable plate (3).

12. A system according to the previous claim, wherein the distance between the two elements of the heating means (6) is adjustable.

13. A system according to any of previous claims, wherein the heating means (6) comprise at least two heating sources, wherein at least one heating source is activable in an independent manner.

14. A system according to any of previous claims, wherein the mold (1.3) , the counter mold (1.4) or both mold pieces (1.3, 1.4) is manufactured by additive manufacturing, preferably by waam; and, the mold piece/pieces (1.3, 1.4) comprises internal ducts for conducting a thermal fluid, wherein the internal ducts are for the heating and/or cooling process.

15. A system according to claims 1 and 12, wherein the internal ducts comprises an internal portion that mimics the shape of at least a portion of the surface adapted to be in contact with the thermo-formable plate (3).

16. A method for manufacturing molded pieces by means of a system according to any of previous claims, wherein the method comprises the steps:
a) installing a thermo-formable plate (3) in the frame (2);
b) installing the frame (2) in the guiding means (5) while the molding machine (1) is in open position;
c) positioning the heating means (6) in the first position, the heating means (6) being activated for heating the thermo-formable plate (3);
d) positioning the heating means (6) in the second position;
e) positioning the molding machine (1) in the closed position, the two mold pieces (1.3, 1.4) exerting force on the thermo-formable plate (3);
f) positioning the molding machine (1) in the open position and removing the frame (2);
g) removing the molded thermo-formable plate (3) from the frame (2).

17. A method according to previous claim, wherein before positioning the molding machine in the open position and removing the frame (2), the mold (1.3) and the counter mold (1.4) are cooled down in order to increase the rigidity of the deformed thermo-formable plate (3).

18. A method according to any of claims 16 to 17, wherein before positioning the molding machine in the closed position, the mold (1.3) and the counter mold (1.4) are heated.
